# EUROPÄISCHE PATENTSCHRIFT

(11) **EP 0 449 228 B1**
(45) Veröffentlichungstag und Bekanntmachung des Hinweises auf die Patenterteilung: **01.06.1994**
(21) Anmeldenummer: 91104805.6
(22) Anmeldetag: 26.03.1991
(51) Int. Cl.: F16F 1/38

(54) **Elastisches Motorlager in Form eines Keillagers**
Elastic engine mounting in wedged form
Support de moteur élastique en forme de coin

(30) Priorität: 27.03.1990 DE 4009828
(43) Veröffentlichungstag der Anmeldung: 02.10.1991
(73) Patentinhaber: METZELER GIMETALL AG, D-80992 München (DE)
(72) Erfinder: Waldecker, Ralf, W-5450 Neuwied 1 (DE)
(74) Vertreter: Seibert, Hannelore

(56) Entgegenhaltungen:
- EP-A- 0 038 547
- EP-A- 0 238 919
- DE-A- 1 813 156
- DE-U- 1 859 855
- DE-U- 1 867 701
- DE-U- 1 917 139
- GB-A- 932 086
- US-A- 3 998 290

## Beschreibung

Die Erfindung bezieht sich auf ein elastisches Motorlager in Form eines Keillagers mit einem inneren keilförmigen Körper und einem äußeren trogförmigen Teil, zwischen denen elastische Körper aus Gummi angeordnet sind, wobei die Gummikörper zumindest im mittleren Bereich zwischen ihren beiden anliegenden Flächen einen Querschnitt mit einer stetigen Umfangslinie aufweisen.

Ein derartiges Keillager ist aus der GB-A-932 086 bekannt. Die dort dargestellten gleichartig ausgebildeten Lager dienen zwar zur Abstützung einer Maschine, können jedoch in gleicher Weise auch als Motorlager eingesetzt werden. Dabei weisen die Gummikörper einen kreisförmigen Querschnitt auf und ihre Berührungsflächen zu dem keilförmigen Körper und dem trogförmigen Teil verlaufen parallel zueinander und sind in einem Winkel von 45° zur Senkrechten geneigt.

Der vorliegenden Erfindung liegt die Aufgabe zugrunde, ein derartiges Keillager so zu gestalten, daß mögliche Spannungsspitzen bei einer Belastung weitgehend vermieden werden und damit die Lebensdauer eines solchen Lagers erheblich erhöht wird.

Zur Lösung dieser Aufgabe ist erfindungsgemäß vorgesehen, daß der innere Körper und das äußere Teil aus Metall bestehen, daß die Gummikörper an den Metallteilen anvulkanisiert sind und daß die einander gegenüberliegenden Haftflächen am inneren keilförmigen als Metallteil ausgebildeten Körper gegenüber der das Lager in Längsrichtung teilenden Senkrechten in einem Anstellwinkel α, β zur Bildung der Keilform geneigt verlaufen und die Anstellwinkel α, β dieser Haftflächen unterschiedlich groß sind.

Damit ist einmal die Bildung von Spannungsspitzen weitgehend vermieden und zum anderen kann bei einem nicht senkrechten Angriff einer Zugkraft durch unterschiedliche Anstellwinkel erreicht werden, daß dennoch auf beide Haftflächen die gleichen Zugkräfte einwirken.

Die Gummikörper können dabei angenähert elliptischen oder kreisförmigen Querschnitt aufweisen.

Ferner ist es möglich, daß die Gummikörper im mittleren Bereich eine kleinere Querschnittsfläche als im Bereich ihrer Haftflächen aufweisen.

Anstelle eines über die Dicke durchgehenden Querschnittes mit einer vollständig stetigen Umfangslinie ist es auch möglich, daß die Gummikörper von einem prismatischen Querschnitt im Bereich ihrer Haftflächen auf einen Querschnitt mit stetiger Umfangslinie im mittleren Bereich übergehen.

Dabei ist es auch möglich, daß zumindest ein Teil der Haftflächen gewölbt ist.

Anhand einer schematischen Zeichnung sind Aufbau und Funktionsweise von Ausführungsbeispielen der Erfindung näher erläutert. Dabei zeigen:
- Fig. 1: einen Längsschnitt durch ein Keillager, das nicht von der Erfindung erfaßt ist,
- Fig. 2A - C: verschiedene Querschnittsformen der Gummikörper,
- Fig. 3: ein Keillager gemäß der Erfindung mit unterschiedlich geneigten Haftflächen des keilförmigen Metallkörpers und
- Fig. 4: ein Keillager, das nicht von der Erdindung erfaßt ist, mit im Winkel zueinander verlaufenden Haftflächen eines Gummikörpers.

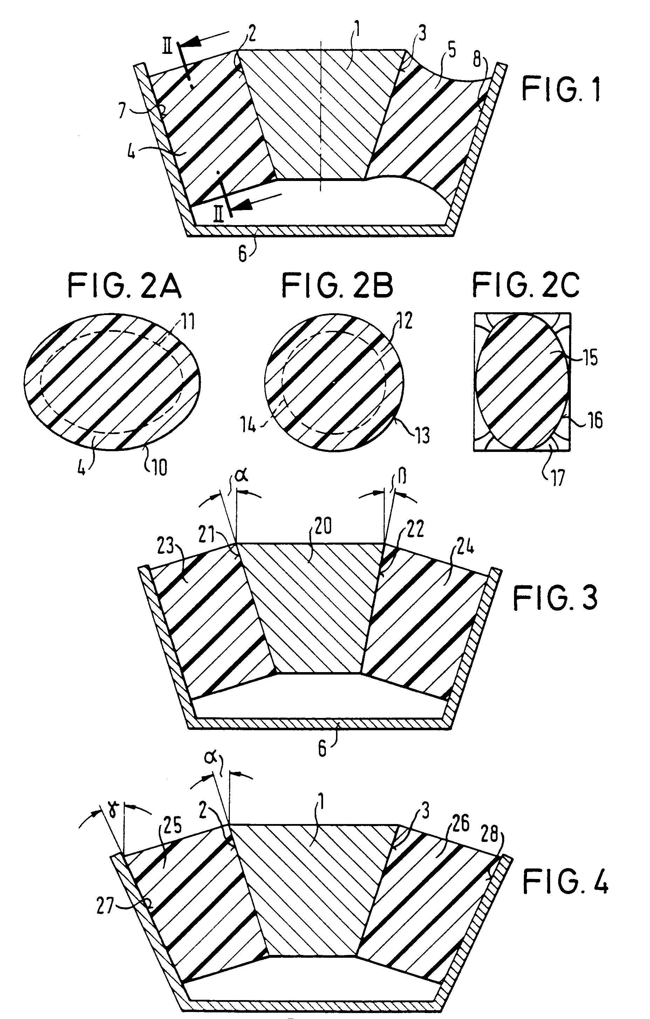

Wie man aus Fig. 1 ersieht, weist ein derartiges Keillager einen zentralen Metallkörper 1 mit keilförmig einander zugeneigten Seitenflächen 2 und 3 auf, an die als Haftflächen Gummikörper 4 und 5 anvulkanisiert sind. Auf der Außenseite sind diese Gummikörper 4 und 5 von einem trogförmigen Metallteil 6 umfaßt, an das sie ebenfalls über Haftflächen 7 und 8 anvulkanisiert sind.

In Fig. 2 sind jetzt verschiedene Querschnittsformen dieser Gummikörper 4 bzw. 5 gezeigt, deren Außenkontur stets eine stetige Umfangslinie aufweist.

So zeigt Fig. 2A einen Gummikörper 4 mit einer ovalen oder elliptischen Umfangslinie 10, wobei dieser Gummikörper 4 über seine gesamte Dicke den gleichen Querschnitt aufweisen soll.

Es ist aber auch möglich, einen solchen Gummikörper 5 in der Mitte dünner auszubilden. Zur Darstellung dessen ist in Fig. 2A mit der gestrichelten Linie 11 der Verlauf der Umfangslinie dargestellt, wie sie sich bei einem Gummikörper 5 im rechten Teil des Keillagers nach Fig. 1 ergeben würde.

In Fig. 2B ist ein Gummikörper 12 mit einer kreisförmigen Umfangslinie 13 gezeigt, die ebenfalls über die gesamte Dicke konstant oder im mittleren Bereich abnehmend sein kann, wie hier auch durch die gestrichelte Linie 14 angedeutet ist.

Fig. 2C zeigt den Querschnitt durch einen Gummikörper 15 mit einer hochkant stehenden elliptischen Umfangslinie 16. Bei diesem Ausführungsbeispiel ist auch ein über die Dicke unterschiedlicher Querschnitt in dem Sinne möglich, daß der Gummikörper 15 im Bereich seiner Haftflächen noch einen prismatischen Querschnitt 17 aufweist und von dort zur Mitte hin in einen elliptischen Querschnitt 16 übergeht.

Eine zusätzliche Möglichkeit zum Abbau von Spannungsspitzen ist bei dem Ausführungsbeispiel nach Fig. 3 gezeigt das alle Merkmale des Patentanspruchs 1 aufweist. Hierbei sind die beiden Anstellwinkel α und β der Haftflächen 21 und 22 des zentralen keilförmigen Metallkörpers 20 unterschiedlich groß ausgeführt. Damit wirken auch unterschiedlich große Kräfte auf die Haftflächen ein, bzw. bei einem nicht senkrechten Angriff einer Zugkraft kann durch unterschiedliche Anstellwinkel erreicht werden, daß dennoch auf beide Haftflächen die gleichen Zugkräfte einwirken.

Schließlich ist in Fig. 4 eine weitere Möglichkeit einer entsprechenden Entlastung gezeigt. Die außen liegenden Haftflächen 27 und 28 sind dabei nicht parallel zu den innenliegenden Haftflächen 2 und 3 der Gummikörper 25 und 26 angeordnet, sondern weisen einen vom Anstellwinkel @ abweichenden Anstellwinkel γ auf, der größer oder kleiner als der Winkel @ sein kann.

Die beschriebenen Maßnahmen der unterschiedlichen Anstellung der Haftflächen zur Senkrechten können dabei zusätzlich jeweils für sich oder auch in Kombination zueinander angewendet werden.

Insgesamt ergibt sich also ein Keillager, daß wegen des Abbaus hoher Spannungsspitzen jetzt für sehr viel höhere Belastungen ausgelegt werden kann, als das bisher möglich war.

## Patentansprüche

1. Elastisches Motorlager in Form eines Keillagers mit einem inneren keilförmigen Körper (20) und einem äußeren trogförmigen Teil (6) zwischen denen elastische Körper aus Gummi (23, 24) angeordnet sind, wobei die Gummikörper (23, 24) zumindest im mittleren Bereich zwischen ihren beiden anliegenden Flächen einen Querschnitt mit einer stetigen Umfangslinie (11, 12) aufweisen, **dadurch gekennzeichnet, daß** der innere Körper (20) und das äußere Teil (6) aus Metall bestehen, daß die Gummikörper (23, 24) an den Metallteilen (20, 6) anvulkanisiert sind und daß die einander gegenüberliegenden Haftflächen (21, 22) am inneren keilförmigen als Metallteil (20) ausgebildeten Körper gegenüber der das Lager in Längsrichtung teilenden Senkrechten mit einem Anstellwinkel (α, β) zur Bildung der Keilform geneigt verlaufen und die Anstellwinkel (α, β) dieser Haftflächen (21, 22) unterschiedlich groß sind.

2. Elastisches Motorlager nach Anspruch 1, dadurch gekennzeichnet, daß die Gummikörper (4; 15) einen angenähert elliptischen Querschnitt (10; 16) aufweisen.

3. Elastisches Motorlager nach Anspruch 1, dadurch gekennzeichnet, daß die Gummikörper (12) einen kreisförmigen Querschnitt (13) aufweisen.

4. Elastisches Motorlager nach einem der Ansprüche 1 bis 3, dadurch gekennzeichnet, daß die Gummikörper (5) im mittleren Bereich eine kleinere Querschnittsfläche (11, 14) als im Bereich ihrer Haftflächen aufweisen.

5. Elastisches Motorlager nach Anspruch 1, dadurch gekennzeichnet, daß die Gummikörper (15) von einem prismatischen Querschnitt (17) im Bereich ihrer Haftflächen auf einen Querschnitt (16) mit stetiger Umfangslinie im mittleren Bereich übergehen.

6. Elastisches Motorlager nach einem oder mehreren der Ansprüche 1 bis 5, dadurch gekennzeichnet, daß zumindest ein Teil der Haftflächen gewölbt ist.

## Claims

1. Elastic engine mounting in the form of a wedge bearing having an inner wedge-shaped body (20) and an outer trough-shaped part (6), between which elastic bodies (23, 24) made of rubber are disposed, the rubber bodies (23, 24) at least in the middle region between their two adjacent surfaces having a cross-section with a continuous peripheral line (11, 12), characterized in that the inner body (20) and the outer part (6) are made of metal, that the rubber bodies (23, 24) are vulcanized to the metal parts (20, 6) and that the opposing adhesive surfaces (21, 22) on the inner, wedge-shaped body in the form of a metal part (20) extend inclined at an angle of incidence (α, β) relative to the vertical, which divides the bearing in longitudinal direction, to form the wedge shape and the angles of incidence (α, β) of said adhesive surfaces (21, 22) differ in size.

2. Elastic engine mounting according to claim 1, characterized in that the rubber bodies (4; 15) have an approximately elliptical cross-section (10; 16).

3. Elastic engine mounting according to claim 1, characterized in that the rubber bodies (12) have a circular cross-section (13).

4. Elastic engine mounting according to one of claims 1 to 3, characterized in that the rubber bodies (5) have a smaller cross-sectional area (11, 14) in the middle region than in the region of their adhesive surfaces.

5. Elastic engine mounting according to claim 1, characterized in that the rubber bodies (15) change from a prismatic cross-section (17) in the region of their adhesive surfaces to a cross-section (16) with a continuous peripheral line in the middle region.

6. Elastic engine mounting according to one or more of claims 1 to 5, characterized in that at least a part of the adhesive surfaces is curved.

## Revendications

1. Support de moteur élastique en forme de coin, comprenant une pièce (20) intérieure cunéiforme et une partie (6) extérieure en forme d'auge, entre lesquelles sont montées des pièces élastiques en caoutchouc (23, 24), les pièces en caoutchouc (23, 24) ayant, au moins dans la partie médiane, entre leurs deux faces de contact, une section transversale ayant une ligne de pourtour (11, 12) continue, caractérisé en ce que la pièce (20) intérieure et la partie (6) extérieure sont en métal, en ce que les pièces en caoutchouc (23, 24) sont vulcanisées sur les pièces (20, 6) en métal, et en ce que les faces (21, 22) d'adhérence opposées, sur la pièce constituée en partie (20) métallique cunéiforme intérieure, s'étendent en étant inclinée par rapport à la verticale divisant le support dans la direction longitudinale, sous un angle d'incidence (α, β) pour former la forme en coin, et les angles d'incidence (α, β) de ces faces (21, 22) d'adhérence sont différentes.

2. Support de moteur élastique selon la revendication 1, caractérisé en ce que les pièces (4; 15) en caoutchouc ont une section transversale (10; 16) sensiblement elliptique.

3. Support de moteur élastique selon la revendication 1, caractérisé en ce que les pièces de caoutchouc (12) ont une section transversale (13) circulaire.

4. Support de moteur élastique selon l'une des revendications 1 à 3, caractérisé en ce que les pièces de caoutchouc (5) ont, dans la partie médiane, une face (11, 14) de section transversale plus petite que dans la partie de leurs faces d'adhérence.

5. Support de moteur élastique selon la revendication 1, caractérisé en ce que les pièces de caoutchouc (15) passent d'une section transversale (17) prismatique dans la région de leurs faces d'adhérence à une section transversale (16) à ligne périphérique continue dans la partie médiane.

6. Support de moteur élastique selon l'une ou plusieurs des revendications 1 à 5, caractérisé en ce qu'au moins une partie des faces d'adhérence est voûtée.
